# EUROPEAN PATENT APPLICATION

(11) **EP 2 993 446 A1**
(43) Date of publication of application: **09.03.2016**
(21) Application number: 15182022.2
(22) Date of filing: 21.08.2015
(51) Int. Cl.: G01D 11/24

(54) **SENSOR ASSEMBLY WITH INTERCHANGEABLE SENSING PACKAGE**

(30) Priority: 04.09.2014 IN CH43462014
(71) Applicant: Pricol Limited, Tamil Nadu 641 018 (IN)
(72) Inventor: SURESH., T, 641 018 Tamil Nadu (IN); SIBI. E., Varguese, 641 018 Tamil Nadu (IN)
(74) Representative: Dall'Olio, Christian

(57) **Abstract**

The present invention relates to interchangeable sensing package fitted to the sensor assembly which is used to sense the speed, position and direction. The sensor assembly comprising of: an interchangeable sensing package; sensor housing; and a connector. The interchangeable sensing package comprises a container which is disposed to house a sensing element with a magnet at a predetermined location and orientation. The sensor housing is disposed to house a Printer Circuit Board (PCB). One end of the sensor housing is fixed to the connector and other end of the sensor housing is fixed to the interchangeable sensing package through snap lock. The PCB is provided with latching mechanism to assemble the interchangeable sensing package to the PCB, said interchangeable sensing package is configured to accommodate diverse sensor housings of diverse configuration.

## Description

### FIELD OF INVENTION

The present invention relates to a sensing device. More particularly, the present invention relates to interchangeable sensing package fitted to the sensor assembly which is used to sense the speed, position and direction. The interchangeable sensing package can be fitted to sensor housings of different configuration.

### DESCRIPTION OF PRIOR ART

Speed, position, angle and direction sensors have many uses on today's application and are fitted into the transmission or wheel or harvesters or engines or any part of the system. Exists are anti-lock braking system wheel speed sensors, transmission speed sensors, vehicle speed sensors, neutral gear position sensors but perhaps the most important are the camshaft and crankshaft position sensors. These two sensors are used to determine the speed and the position of the camshaft or crankshaft and or direction of rotation of the shaft. The information provided by the sensor is processed by Engine Control Unit (ECU) and used to determine the timing for the ignition of the spark plugs or to determine the timing for the supply of fuel by the fuel injector or for any similar applications.

Also there exist sensors namely passive type and active type sensors in vehicles. The conventional passive sensor consists of a magnetic pin with fine copper wire wrapped around to create an alternating magnetic field. The sensor changes polarity of output sinusoidal signal as a toothed metal ring called a toner ring passes through its magnetic field. The toner ring is attached to the rotating part, the speed or position or direction of which is to be monitored.

In case of passive type sensors, if the signal generated is affected by some reason a false cycling problem may result. The false cycling is unwarranted especially when used in systems like Anti-lock Braking System (ABS). The activation of the ABS system is usually at slow speeds or at the very end of a stop cycle. The passive type sensors have a few pitfalls which include limited operation at low speeds, more air gap i.e., gap between sensor and toner ring and the inability to differentiate the signals when it operates in reverse direction.

Active sensors are preferred in today's automobile applications. The active sensors with metal body comprises a housing consist of printed circuit board which holds active sensing element and magnet. One end of the housing comprises a fixing portion for fitment of the sensor and the other end is provided with an axial passage opening to accommodate the connectors as well as to insert printed circuit board with active sensor. Three or more terminals (depends on requirement) connected with printed circuit board will extend outside the housing to interface with cluster/ ECU or both through the connector which is plugged to the housing. By and large the sensor housing is made of polymer material, for example nylon or PBT and provided with means for holding the printed circuit board assembly comprising of a printed circuit board, three or more terminals that hold the sensing element and magnet. The inner configuration of the sensor housing is determined by the specification and dimensions of the printed circuit board assembly.

The sensing distance is very important in any sensor application, and one of the deciding factors is wall thickness of the sensor housing. In certain applications the sensor is arranged in the axial direction at the bottom of the housing and the distance of the sensing portion i.e. the dimension from the fixing portion to the bottom portion of the housing vary from application to application. This dimension vary according to the vehicle in which it is used and the printed circuit board specification and dimension. This necessitates the requirement of keeping sensor housings of different type and size. In certain applications the sensor need to be arranged in the radial direction. In such case it will be again essential to have different types of sensor assembly.

It will be advantageous to have a sensor assembly fitted with sensing package, which could be fitted in to the housings of different sensor assembly such that it take care the various dimensional requirements and or the sensor orientation. While the sensor housings could be of standard type the sensing package could be constructed according to the application requirement. The sensor assembly of this type will be cost effective due to the fact that the sensor assembly could be constructed with standard sensor housing by simply inter changing the sensing package alone and sensor package could be proven standard. This will help in the variety rationalization and cost reduction.

US6836111 discloses a sensor assembly with a universal sensor module for sensing angular position of a rotatable object is provided. The universal sensor module includes module housing. The sensor module further includes a rotatable assembly in the module housing configured to define a bore for interchangeably receiving one of the following: the rotatable object, and an interface adaptor for receiving the rotatable object.

Accordingly, there exists a need to have a sensor assembly constructed with interchangeable sensing package that could be fitted in to different sensor housings with different configuration and different size.

### OBJECTS OF INVENTION

One or more of the problems of the conventional prior art may be overcome by various embodiments of the present invention.

It is the primary object of the present invention to provide an interchangeable sensing package fitted to a sensor assembly which is used to sense the speed, position and direction.

It is another object of the present invention to provide a sensor assembly with interchangeable sensing package that could be plugged in sensor housings of different make, shape and configuration.

### SUMMARY OF INVENTION

Thus according to the basic aspect of the present invention, there is provided a sensor assembly comprising:
an interchangeable sensing package;
sensor housing; and
a connector,
wherein the interchangeable sensing package comprises a container which is disposed to house a sensing element with a magnet at a pre-determined location and orientation,
wherein the sensor housing is disposed to house a Printer Circuit Board (PCB),
wherein one end of the sensor housing is fixed to the connector and other end of the sensor housing is fixed to the interchangeable sensing package through snap lock,
wherein the PCB is provided with latching mechanism to assemble the interchangeable sensing package to the PCB, and
wherein the interchangeable sensing package is configured to accommodate diverse sensor housings of diverse configuration.

It is another aspect of the present invention, wherein the sensing element provided with three or more terminals is electrically connected to the respective three or more contact plates arranged at lower radial face of the container.

It is another aspect of the present invention, wherein the PCB provided with three or more terminals at its lower end is electrically connected to the respective three or more contact plates arranged at upper radial face of the container.

It is another aspect of the present invention, wherein the PCB provided with three or more terminals at its upper end is electrically connected to the respective three or more terminals of the connector.

It is another aspect of the present invention, wherein the connector electrically connects the sensing element fitted to the container through the contact plates for interfacing with cluster/ Engine Control Unit (ECU).

It is another aspect of the present invention, wherein sensing face of the sensing element is covered with polymeric material of pre-defined thickness to enhance the sensitivity.

### BRIEF DESCRIPTION OF THE ACCOMPANYING DRAWINGS

Figure 1: illustrates the sensor assembly with interchangeable sensing package according to the present invention.
Figure 2: illustrates the cross sectional view of the sensor assembly with interchangeable sensing package according to the present invention.

### DETAILED DESCRIPTION OF THE INVENTION WITH REFERENCE TO THE ACCOMPANYING DRAWINGS

As stated above, the present invention provides an interchangeable sensing package fitted to the sensor assembly which is used to sense the speed, position and direction.

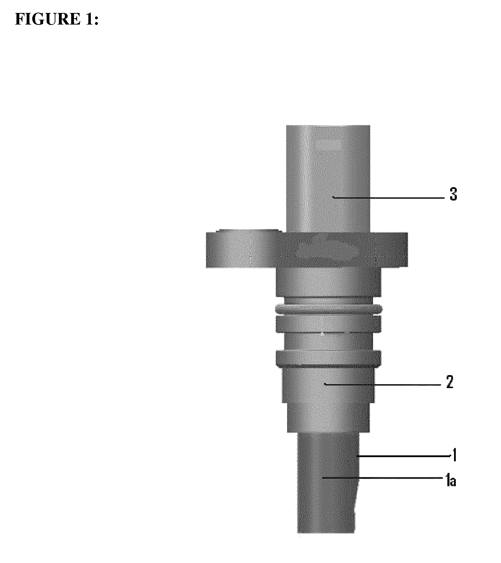

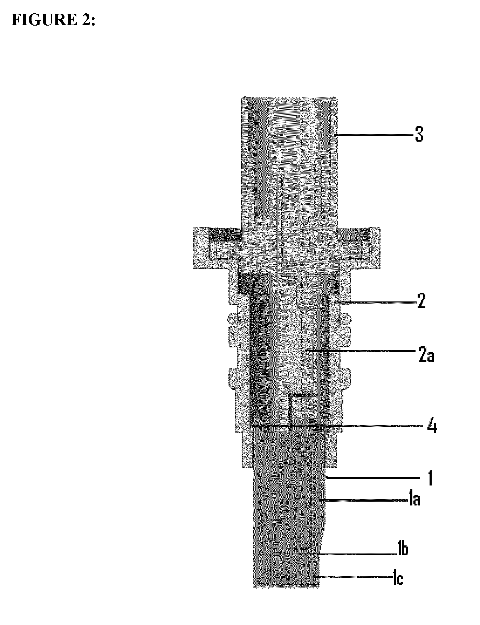

Referring to Figures 1 and 2, a sensor assembly comprises of an interchangeable sensing package (1); sensor housing (2); a Printed Circuit Board (PCB) (2a); and a connector (3). The sensor housing (2) is disposed to house the PCB (2a). The interchangeable sensing package comprises a container (1a) which is preferably made of non metallic material and disposed to house a sensing element (1c) with a magnet (1b) at a pre-determined location and orientation. One end of the sensor housing (2) is fixed to the connector (3) and the interchangeable sensing package is fixed to other end of the sensor housing (2) through snap lock (4). The PCB (2a) is provided with latching mechanism to assemble the interchangeable sensing package to the PCB (2a). Epoxy solution or some other sealant material is used in the joints between the sensor housing (2) and interchangeable sensing package (1) to restrict water/ oil ingress. The interchangeable sensing package (1) is configured to accommodate various sensor housings (2) of diverse configuration.

The sensing element (1c) is provided with three or more terminals and is electrically connected to the respective three or more contact plates arranged at lower radial face of the container (1a). The container (1a) is further provided with three or more contact plates arranged at upper radial face of the container (1a). The PCB (2a) housed within the sensor housing (2) is provided with three or more terminals at its lower end, said terminals is electrically connected to the respective contact plates arranged at upper radial face of the container (1a). The PCB (2a) is further provided with three or more terminals at its upper end and is electrically connected to the respective three or more terminals of the connector (3) and assembled. The connector (3) electrically connects the sensing element (1c) fitted to the container (1a) through the contact plates for interfacing with cluster/ Engine Control Unit (ECU).

The container (1a) is made of plastic material for example nylon. Sensing face of the sensing element (1c) is exposed to the atmosphere to improve the sensitivity. Further, the sensing face of the sensing element (1c) is covered with very thin layer of the polymeric material to enhance the sensitivity. The terminals connected to the sensing element (1c) extends outside the sensor housing (2) to interface with cluster/engine control unit or both to indicate the speed in display device or to control other applications. The sensing element (1c) is hall-effect type or magneto resistive element type. It should be noted that the dimensions of the sensor housing (2) and specification of the PCB (2a) depends on vehicle application.

## Claims

1. A sensor assembly comprising:
an interchangeable sensing package (1);
sensor housing (2); and
a connector (3),
wherein the interchangeable sensing package (1) comprises a container (1a) which is disposed to house a sensing element (1c) with a magnet (1b) at a pre-determined location and orientation,
wherein the sensor housing (2) is disposed to house Printer Circuit Board (PCB) (2a),
wherein one end of the sensor housing (2) is fixed to the connector (3) and other end of the sensor housing (2) is fixed to the interchangeable sensing package (1) through snap lock (4),
wherein the PCB (2a) is provided with latching mechanism to assemble the interchangeable sensing package to the PCB (2a), and
wherein the interchangeable sensing package (1) is configured to accommodate diverse sensor housings (2) of diverse configuration.

2. The sensor assembly as claimed in claim 1, wherein the sensing element (1c) provided with three or more terminals is electrically connected to the respective three or more contact plates arranged at lower radial face of the container (1a).

3. The sensor assembly as claimed in claim 1, wherein the PCB (2a) provided with three or more terminals at its lower end is electrically connected to the respective three or more contact plates arranged at upper radial face of the container (1a).

4. The sensor assembly as claimed in claim 3, wherein the PCB (2a) provided with three or more terminals at its upper end is electrically connected to the respective three or more terminals of the connector (3).

5. The sensor assembly as claimed in claim 4, wherein the connector (3) electrically connects the sensing element (1c) fitted to the container (1a) through the contact plates for interfacing with cluster/ Engine Control Unit (ECU).

6. The sensor assembly as claimed in claim 5, wherein sensing face of the sensing element (1c) is covered with polymeric material of pre-defined thickness to enhance the sensitivity.
